Europäisches Patentamt

European Patent Office

Office européen des brevets

(11) Veröffentlichungsnummer: **0 089 410**
**A2**

(12) **EUROPÄISCHE PATENTANMELDUNG**

(21) Anmeldenummer: **82110912.1**

(22) Anmeldetag: **25.11.82**

(51) Int. Cl.³: **A 47 B 96/02**
**F 16 B 12/08, B 23 P 15/12**

(30) Priorität: **24.03.82 DE 3210798**

(43) Veröffentlichungstag der Anmeldung:
**28.09.83 Patentblatt 83/39**

(84) Benannte Vertragsstaaten:
**AT BE CH DE FR GB IT LI NL SE**

(71) Anmelder: **Julius Hupfer GmbH & Co.**
**Am Hawerkamp 10-12**
**D-4400 Münster(DE)**

(72) Erfinder: **Fockenbrock, Bernhard**
**Meisenweg 7**
**D-4404 Telgte(DE)**

(74) Vertreter: **Habbel, Hans-Georg, Dipl.-Ing.**
**Postfach 3429 Am Kanonengraben 11**
**D-4400 Münster(DE)**

(54) **Rostauflage für Regale od.dgl.**

(57) Die Erfindung schlägt eine Rostauflage für Regal od. dgl. vor, bei welcher Querleisten eingesetzt werden, die bündig mit ihrer Oberkante mit der Oberkante der Längsleisten abschließen, an ihrer Unterseite aber keinerlei Vorsprünge oder Ansätze aufweisen, so daß damit eine leichte Reinigungsmöglichkeit für den Rost gegeben ist und Schmutzanlagerungspunkte vermieden werden.

- 1 -

## Rostauflage für Regale od. dgl.

Die Erfindung bezieht sich auf eine Rostauflage für Regale od. dgl. mit zwei Längsleisten und zwischen diesen angeordneten, von diesen getragenen Querleisten, deren Oberkante mit der Oberkante der Längsleisten bündig abschließen.

Rostauflagen der vorstehend gekennzeichneten Art sind allgemein bekannt. Üblicherweise bestehen derartige Rostauflagen aus an den Längsleisten befestigten querverlaufenden T-Profilen, die materialschlüssig mit den Längsleisten verbunden sind. Hierbei entstehen an den Unterseiten der Querleisten Schmutzanlagerungsstellen, so daß beim Einsatz derartiger Rostauflagen, beispielsweise in Lebensmittelbetrieben, Schwierigkeiten hinsichtlich der Sauberhaltung der Auflagen bestehen.

Der Erfindung liegt die Aufgabe zugrunde, eine Rostauflage zu schaffen, bei der eine glatte Ober- und Unterfläche gebildet wird, so daß die Anordnung leicht sauberzuhalten ist und Schmutzansatzstellen, die nur schwer zugänglich sind, mit Sicherheit vermieden werden. Hierbei soll aber das Herstellungsverfahren derart kostengünstig sein, daß eine sichere, schnelle Großserienproduktion trotz geringer Produktionskosten möglich ist.

Diese der Erfindung zugrundeliegende Aufgabe wird dadurch gelöst, daß an den Längsleisten auf den Innenseiten derselben, Tragzapfen angeordnet sind und daß
die Querleisten aus Rohrprofilen bestehen, wobei die
Tragzapfen der Längsleisten in den Innenraum der Querleisten mit Preßsitz eingesetzt sind. Insbesondere
dann, wenn die Tragzapfen und die Querleisten aus
Aluminium bestehen, ist hier ein Preßsitz möglich, der
durch Verformung des Werkstoffes erzielt wird und zu
einer festen Anordnung führt, so daß trotz einfachem
Eindrücken der Längsleisten in die zugeordneten Querleisten eine Verbindung geschaffen wird, die nicht ohne
Materialzerstörung gelöst werden kann.

Es ist offensichtlich, daß die Längsleisten großserienmäßig dadurch hergestellt werden können, daß die Tragzapfen ausgestanzt werden.

Gemäß einem weiteren wesentlichen Merkmal wird der
Preßsitz zwischen Längsleisten und Querleisten dadurch
erzielt, daß die maximale Höhe der Tragzapfen der maximalen Höhe der rohrförmigen Öffnung des Innenraumes der
Querleisten entspricht und die maximale Breite der Tragzapfen um ein geringes Maß größer als die maximale
Innenbreite der Öffnung des Hohlraumes der Querleisten
ist. Hierdurch wird sichergestellt, daß die eingesetzten Querleisten bündig mit den Oberkanten der Längsleisten abschließen, wenn der Abstand der Oberkante der
Tragzapfen von der Oberkante der Längsleiste genau der
Materialstärke der Wandung der Querleisten entspricht.

- 3 -

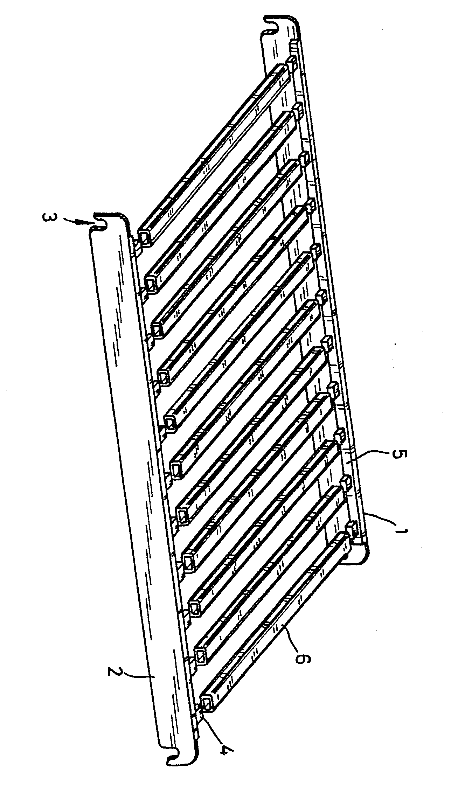

Ein Ausführungsbeispiel der Erfindung wird nachfolgend anhand der Zeichnung erläutert.

In der Zeichnung sind mit 1 und 2 zwei Längsleisten bezeichnet, die mit entsprechenden Aufhängeösen 3 ausgerüstet sind, mit der die Längsleisten in die zugeordneten Tragelemente der Regalständer eingehängt werden können oder auch aneinander angeschlossen werden können, beispielsweise durch einen Übereckaufbau.

An der Innenseite der Längsleisten sind im oberen Bereich derselben Tragzapfen 4 vorgesehen. Hierbei ist es möglich, die Längsleisten aus Aluminium zu extrudieren, wobei dann an der Innenseite eine durchgehende, der Breite der Tragzapfen 4 entsprechende Leiste gezogen wird. Die Tragzapfen können dann in einem anschließenden Bearbeitungsverfahren durch Ausstanzen der verbleibenden Zwischenräume 5 hergestellt werden.

Die Tragzapfen weisen vorzugsweise eine maximale Höhe auf, die der maximalen Innenweite der Öffnung der rohrförmigen Querleisten entspricht, so daß beim Einsetzen der Tragzapfen in die Querleiste, ein Aufwölben des Materials der Querleiste nach oben hin vermieden wird. Dabei weisen die Tragzapfen eine Breite auf, die um ein geringes Maß größer als die maximale Innenbreite der Öffnung des Hohlraumes der Querleisten ist, wobei die Querleisten in der Zeichnung mit 6 bezeichnet sind. Die Tragzapfen sind leicht konisch gestaltet, so daß ein einwandfreies Einführen der Tragzapfen in die Öffnung der Querleisten erreicht wird, andererseits wird durch das Breitenmaß der Tragzapfen ein leichtes Aufweiten der Querleisten zur Seite hin bedingt, d.h. hier erfolgt ein Preßsitz zwischen Tragzapfen und Querleiste, der

so fest ist, daß ein Lösen der Längsleisten von den Querleisten nicht mehr möglich ist.

Durch das erfindungsgemäße Herstellungsverfahren und die erfindungsgemäße Ausbildung des Rostes wird ein Rost geschaffen, der allen Anforderungen der Praxis der Verbraucher gerecht wird, der dabei aber gleichzeitig in seinem Herstellungsverfahren so gestaltet ist, daß er kostengünstig und in Großserienproduktion hergestellt werden kann.

Die an sich im Querschnitt rechteckigen Querleisten werden an ihren Außenseitenkanten so angefast, daß eine Oberfläche geschaffen wird, die keine scharfen Kanten aufweist. Hierzu werden die vier Seitenecken entsprechend bearbeitet.

Patentansprüche:

1. Rostauflage für Regale od. dgl. mit zwei Längsleisten und zwischen diesen angeordneten, von diesen getragenen Querleisten, deren Oberkante mit der Oberkante der Längsleisten bündig abschließen, dadurch gekennzeichnet, daß an den Längsleisten (1, 2) auf den Innenseiten derselben Tragzapfen (4) angeordnet sind, wobei die Querleisten (6) aus Rohrprofilen gebildet sind und die Tragzapfen (4) der Längsleisten (1, 2) in den Innenraum der Querleisten (6) mit Preßsitz eingesetzt sind.

2. Vorrichtung nach Anspruch 1, dadurch gekennzeichnet, daß die Tragzapfen (4) eine leicht konische Form aufweisen.

3. Vorrichtung nach Anspruch 1 und 2, dadurch gekennzeichnet, daß die maximale Höhe der Tragzapfen (4) der maximalen Höhe der rohrförmigen Öffnung des Innenraumes der Querleisten (6) entspricht und die maximale Breite der Tragzapfen (4) um ein geringes Maß größer als die maximale Innenbreite der Öffnung des Hohlraumes der Querleisten (6) ist.

4. Vorrichtung nach einem oder mehreren der vorhergehenden Ansprüche, dadurch gekennzeichnet, daß wenigstens die Tragzapfen (4) und die Querleisten (6) aus Aluminium bestehen.

- 2 -

5. Vorrichtung nach einem oder mehreren der vorhergehenden Ansprüche, dadurch gekennzeichnet, daß die Eckkanten der Querleisten (6) abgerundet ausgebildet sind.

0089410